# EUROPEAN PATENT SPECIFICATION

(11) **EP 4 448 654 B1**
(45) Date of publication and mention of the grant of the patent: **27.08.2025**
(21) Application number: 22847506.7
(22) Date of filing: 14.12.2022
(51) Int. Cl.: C08L 23/14, C08F 210/06, C09J 123/14, C09J 123/08, C08F 4/659

(54) **PROPYLENE-BASED BLEND COMPOSITIONS**
PROPYLENBASIERTE MISCHUNGSZUSAMMENSETZUNGEN
COMPOSITIONS DE MÉLANGES À BASE DE PROPYLÈNE

(30) Priority: 17.12.2021 US 202163290719 P
(43) Date of publication of application: 23.10.2024
(73) Proprietor: ExxonMobil Chemical Patents Inc., Baytown, TX 77520 (US)
(72) Inventor: GURURAJAN, Giriprasath, Missouri City, TX 77459 (US); BRAM, Lauren P., Houston, TX 77006 (US); UHL, Eugene R., Massillon, OH 44646 (US); SOTOMAYOR, Luis A., Houston, TX 77008 (US); HUFF, Caol P., Houston, TX 77007 (US); VALDEZ, Alexandra K., Omaha, NE 68102 (US); AUSTIN, Jennifer J., The Woodlands, TX 77381 (US)
(74) Representative: ExxonMobil Petroleum & Chemical BV
(86) International application number: PCT/US2022/081503
(87) International publication number: WO 2023/114808

(56) References cited:
- WO-A1-2013/134038
- WO-A1-2015/164016
- US-A1- 2015 176 201

## Description

### FIELD

The present invention relates to polymer blend compositions, more particularly to propylene-based elastomer compositions that include a blend of a majority polymer fraction having a higher M_{W} and a minority polymer fraction having a lower M_{W} and methods of making same.

### BACKGROUND

Propylene-based elastomers have been developed that are in high demand due to their high elasticity, flexibility, toughness, clarity, and processability. Such elastomers have a wide range of applications, including blown and cast films, injection molded containers and other goods, nonwoven fabrics, and hot-melt adhesives. Both high-viscosity and low-viscosity propylene-based elastomers have been produced. Unfortunately, conventional propylene-based elastomers often fail to achieve a good balance of elasticity, stiffness, and flow characteristics. As a result, customers of such propylene-based elastomers often combine multiple propylene-based elastomer products in pellet form at their production facilities to achieve the desired elasticity, stiffness, and flowability needed for certain end-use products such as carpet backing sheets. The handling cost of combining so many products can be very high due to the need to use multiple conveyor systems. Furthermore, mixing of different propylene-based elastomer products can lead to pellet agglomeration and hence flow issues throughout the production facility.

One type of catalyst system that can be used to produce propylene-based elastomers is a metallocene-based catalyst system. Metallocene catalysts are homogenous single site catalysts that include organometallic coordination compounds in which one or two cyclopentadienyl rings or substituted cyclopentadienyl rings are π-bonded to a central transition metal atom. Metallocene catalysts typically produce propylene-based elastomers that have a narrow molecular weight distribution and a uniform distribution of comonomer among the molecules. While a polymer having a narrow molecular weight distribution and a uniform comonomer distribution can be advantageous for certain end-use applications, this type of polymer can be undesirable for others. For example, stability in processing operations, such as blown film and blow molding, often is reduced with a narrow molecular weight distribution polymer, as compared to a broad molecular weight distribution polymer, resulting in reduced production rates. Also, a polymer having a uniform comonomer distribution as compared to a polymer having a broad comonomer distribution across the molecular chains (also referred to a conventional composition distribution) can have less desirable melt processability.

A need therefore exists for a way to inexpensively produce propylene-based elastomers having a combination of high elasticity and stiffness properties without being concerned with pellet agglomeration problems. Also, it would be beneficial to have the ability to produce propylene-based elastomers having a broad molecular weight distribution and a broad comonomer distribution.

### SUMMARY

Propylene-based elastomer compositions are provided that include a blend of a majority polymer fraction having a higher M_{W} and a minority polymer fraction having a lower M_{W}. Such propylene-based compositions can be used to make various end use products such as carpet backing sheets and hot melt adhesives (HMAs).

Provided herein is a polymer blend composition according to claim 1.

Further provided herein is a process for making a polymer blend composition, according to claim 18.

Further provided herein is a hot melt adhesive composition according to claim 13.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
FIG. 1 depicts a process flow diagram of a process for producing polymer blend compositions, according to one or more embodiments provided herein.
FIG. 2a is a graph depicting the molecular weight distribution and the comonomer distribution across the molecular weights of the polymer for propylene-ethylene blend compositions, according to one or more embodiments provided herein.
FIG. 2b is a graph depicting the bimodal molecular weight distribution and the cumulative molecular weight distribution of a propylene-ethylene blend composition, according to one or more embodiments provided herein.

### DETAILED DESCRIPTION

It is to be understood that the following disclosure describes several exemplary embodiments for implementing different features, structures, and/or functions of the invention. Exemplary embodiments of components, arrangements, and configurations are described below to simplify the present disclosure; however, these exemplary embodiments are provided merely as examples and are not intended to limit the scope of the invention. Additionally, the present disclosure may repeat reference numerals and/or letters in the various exemplary embodiments and across the Figures provided herein. This repetition is for the purpose of simplicity and clarity and does not in itself dictate a relationship between the various exemplary embodiments and/or configurations discussed in the Figures. Moreover, the exemplary embodiments presented below can be combined in any combination of ways, *i.e.,* any element from one exemplary embodiment can be used in any other exemplary embodiment, without departing from the scope of the disclosure.

Certain embodiments and features have been described using a set of numerical upper limits and a set of numerical lower limits. It should be appreciated that ranges including the combination of any two values, e.g., the combination of any lower value with any upper value, the combination of any two lower values, and/or the combination of any two upper values are contemplated unless otherwise indicated. Certain lower limits, upper limits, and ranges appear in one or more claims below. All numerical values are "about" or "approximately" the indicated value, and take into account experimental error and variations that would be expected by a person having ordinary skill in the art.

Additionally, certain terms are used throughout the following description and claims to refer to particular components. As one skilled in the art will appreciate, various entities can refer to the same component by different names, and as such, the naming convention for the elements described herein is not intended to limit the scope of the invention, unless otherwise specifically defined herein. Further, the naming convention used herein is not intended to distinguish between components that differ in name but not function.

In the following discussion and in the claims, the terms "including" and "comprising" are used in an open-ended fashion, and thus should be interpreted to mean "including, but not limited to." The phrase "consisting essentially of' means that the described/claimed composition does not include any other components that will materially alter its properties by any more than 5% of that property, and in any case does not include any other component to a level greater than 3 mass%.

The term "or" is intended to encompass both exclusive and inclusive cases, i.e., "A or B" is intended to be synonymous with "at least one of A and B," unless otherwise expressly specified herein.

The indefinite articles "a" and "an" refer to both singular forms (i.e., "one") and plural referents (i.e., one or more) unless the context clearly dictates otherwise. For example, embodiments using "an olefin" include embodiments where one, two, or more olefins are used, unless specified to the contrary or the context clearly indicates that only one olefin is used.

The term "wt%" means percentage by weight, "vol%" means percentage by volume, "mol%" means percentage by mole, "ppm" means parts per million, and "ppm wt" and "wppm" are used interchangeably and mean parts per million on a weight basis. All concentrations herein, unless otherwise stated, are expressed on the basis of the total amount of the composition in question.

The term "alpha-olefin" refers to any linear or branched compound of carbon and hydrogen having at least one double bond between the α and β carbon atoms. For purposes of this specification and the claims appended thereto, when a polymer or copolymer is referred to as a "polyalphaolefin", the alpha-olefin present in such polymer or copolymer is the polymerized form of the alpha-olefin. Also, the term "amorphous polyalphaolefin" refers to a polyalphaolefin in which the polymer chains are not arranged in ordered crystals.

The term "polymer" refers to any two or more of the same or different repeating units/mer units or units. The term "homopolymer" refers to a polymer having units that are the same. The term "copolymer" refers to a polymer having two or more units that are different from each other, and includes terpolymers and the like. The term "terpolymer" refers to a polymer having three units that are different from each other. The term "different" as it refers to units indicates that the units differ from each other by at least one atom or are different isomerically. Likewise, the definition of polymer, as used herein, includes homopolymers, copolymers, and the like. By way of example, when a copolymer is said to have a "propylene" content of 10 wt% to 30 wt%, it is understood that the repeating unit/mer unit or simply unit in the copolymer is derived from propylene in the polymerization reaction and the derived units are present at 10 wt% to 30 wt%, based on a weight of the copolymer.

The term "solution polymerization" refers to a polymerization process in which the polymer is dissolved in a liquid polymerization medium, such as an inert solvent, monomer(s), or blends thereof. A solution polymerization is typically homogeneous. The term "homogeneous polymerization" refers to a polymerization process where the polymer product is dissolved in the polymerization medium. Such systems are preferably not turbid as described in J. Vladimir Oliveira, C. Dariva, and J. C. Pinto, Ind. Eng. Chem. Res., 29, 2000, 4627. A homogeneous polymerization process is typically a process where at least 90 wt% of the product is soluble in the reaction media.

As used herein, "Mn" refers to the number average molecular weight of the different polymers in a polymeric material, "Mw" refers to the weight average molecular weight of the different polymers in a polymeric material, and "Mz" refers to the z average molecular weight of the different polymers in a polymeric material. The terms "molecular weight distribution" (MWD) and "polydispersity index" (PDI) are used interchangeably to refer to the ratio of Mw to Mn. Unless otherwise noted, all molecular weights (e.g., Mw, Mn, Mz) are reported in units of g/mol. Also, the term "broad orthogonal comonomer distribution" (BOCD) refers to a positively sloped comonomer content profile along the log Mw of a polymer.

In the following discussion, reference to a carbon-containing compound such as a hydrocarbon may be made in the shorthand form of "C*n*", where *n* refers to the number of carbon atoms in the compound regardless of the number of hydrogen or heteroatoms in the compound. If a plus or minus sign is used, it designates a range of carbon atoms containing n carbon atoms or more or n carbon atoms or less. For example, "C9+" refers to compounds such as hydrocarbons having 9 or more carbon atoms, and "C9-"refers to compounds such as hydrocarbons having 9 or fewer carbon atoms.

Nomenclature of elements and groups thereof used herein are pursuant to the Periodic Table used by the International Union of Pure and Applied Chemistry after 1988. An example of the Periodic Table is shown in the inner page of the front cover of Advanced Inorganic Chemistry, 6th Edition, by F. Albert Cotton et al. (John Wiley & Sons, Inc., 1999).

A detailed description will now be provided. Each of the appended claims defines a separate invention, which for infringement purposes is recognized as including equivalents to the various elements or limitations specified in the claims. Depending on the context, all references to the "invention" may in some cases refer to certain specific embodiments only. In other cases, it will be recognized that references to the "invention" will refer to subject matter recited in one or more, but not necessarily all, of the claims. Each of the inventions will now be described in greater detail below, including specific embodiments, versions and examples, but the inventions are not limited to these embodiments, versions or examples, which are included to enable a person having ordinary skill in the art to make and use the inventions, when the information in this disclosure is combined with publicly available information and technology.

Polymer blend compositions are disclosed herein that include: a major polymer fraction having a high Mw of 100,000 to 300,000 and a melt flow rate (MFR) of 0.1 g/10 min to 70.0 g/10 min, as measured according to ASTM D1238; and a minor polymer fraction having a lower Mw of 5,000 to 60,000 and a Brookfield viscosity of 500 mPa·s to 50,000 mPa·s, as measured according to ASTM D-3236 (190°C). Both the major and minor polymer fractions can include propylene derived units and at least one other comonomer derived units, e.g., ethylene derived units. The content of the at least one other comonomer derived units in the minor polymer fraction is at least 7 wt%, preferably at least 9 wt%, less than the content of the at least one other comonomer derived units in the major polymer fraction. The polymer blend compositions can include about 60 wt% to about 95 wt% of the major polymer fraction and about 5 wt% to about 35 wt% of the minor polymer fraction. Also, the major polymer fraction can include about 10 wt% to about 30 wt%, preferably about 14 wt% to about 16 wt%, of the at least one other comonomer derived units, and the minor polymer fraction can include about 2 wt% to about 8wt%, preferably about 3 wt% to about 6 wt%, of the at least one other comonomer derived units. When subjected to Temperature Rising Elution Fractionation, the major polymer fraction is preferably soluble at -15°C in a hydrocarbon solvent, such as xylene and/or orthodichlorobenzene, whereas the minor polymer fraction is preferably insoluble at -15°C in the hydrocarbon solvent. The major polymer fraction can have a low amount of crystallinity or can be amorphous, as indicated by the major polymer fraction having a heat of fusion of less than or equal to about 10 J/g, as measured using differential scanning calorimetry (DSC). In contrast, the minor polymer fraction can have a high amount of crystallinity, as indicated by its higher heat of fusion. Also, the triad tacticity of the major polymer fraction can be greater than or equal to the triad tacticity of the minor polymer fraction.

It has been surprisingly discovered that the inventive polymer blend compositions (also known as "elastomers") disclosed herein can have a broad or bimodal MWD ranging from about 2.7 to about 5.0, as determined by Gel Permeation Chromatography (GPC), and a nonuniform, broad orthogonal comonomer distribution (BOCD). The CD slope 90 can be less than the CD slope 50 for each polymer blend composition. A polymer having a broad comonomer distribution can either have a relatively high molecular weight chain with lower comonomer incorporation or a relatively low molecular weight chain with higher comonomer incorporation. The procedures that can be used to determine CD slopes and molecular weight moments are described in the Examples below.

Such polymer blend compositions can unexpectedly exhibit a combination of desirable properties such as high elasticity, high stiffness, and good flow characteristics, as indicated by a MFR ranging from about 80 to about 400 g/10 min. Surprisingly, the blend compositions also can exhibit a faster than usual crystallization rate, with an isothermal crystallization half-time at 5°C of about 0.3 min to about 3.0 min, preferably about 0.5 min to about 2.0 min, as measured using DSC. As such, customers can achieve the desired properties of their end use products using only the polymer blend compositions disclosed herein without needing to combine such compositions with other polymers of varying properties, and hence with only one conveyor system. Thus, the polymer blend compositions disclosed herein provide customers with a less expensive alternative for achieving certain properties in their final products.

It has also been surprisingly discovered that the polymer blend compositions experience less pellet agglomeration and thus are less likely to cause customers handling issues. Without intending to be limited by theory, it is believed that the since the polymer blend crystallizes at a faster rate than usual, the polymer pellets can achieve a hardness, in a short period of time after production, which enables the pellets to flow freely, even after long storage periods. As such, the pellets have a lower tendency to agglomerate, enabling customers to move them more easily around their storage facilities.

The polymer blend compositions disclosed herein are suitable for end use products such carpet backing sheets with potentially high filler loading, melt blown fibers, and propylene-based masterbatch for use in various polymeric materials.

A particularly suitable end use product of the polymer blend compositions disclosed herein is a hot melt adhesive (HMA). In one or more embodiments, HMA compositions can include about 1 wt% to about 40 wt%, preferably about 5 wt% to about 35 wt%, of the polymer blend composition. The HMA compositions can also include other polymers such as low viscosity propylene-ethylene (C3/C2) copolymer, high viscosity C3/C2 copolymer, amorphous polyalphaolefin (APAO), linear alpha olefin (LAO), ethylene-vinyl acetate (EVA) and combinations thereof.

The amount of APAO present in the HMA compositions can range from 0 wt% to about 75 wt%, preferably from about 10 wt% to about 60 wt%. The amount of EVA present in the HMA compositions can range from 0 wt% to about 40 wt%, preferably from about 25 wt% to about 35 wt%. Suitable EVA polymers can have a vinyl ester comonomer content of about 5 wt% to about 50 wt% or about 10 wt% to about 40 wt%, based on the total copolymer mass.

The HMA compositions can include other additives such as tackifiers, waxes, antioxidants, diluents, e.g., oils and linear alpha olefins (LAOs), and combinations thereof. Other suitable additives are commonly known in the art.

The term "tackifier" refers to a substance that can increase the stickiness of the surface of an adhesive. The amount of tackifier present in the HMA compositions can range from about 10 wt% to about 70 wt%, preferably from about 20 wt% to about 60 wt%. Suitable tackifiers have an aromaticity of 0% to about 15 % and a softening point of about 50°C to about 150°C, preferably about 80°C to about 140°C. Examples of suitable commercially available tackifiers can be found in the Examples below.

The term "wax" refers to a substance that can reduce the overall viscosity of the HMA composition. Waxes can be added to control the set time and cohesion of the HMA composition. The amount of wax present in the HMA composition can range from 0 wt% to about 30 wt%. For an HMA composition used in packaging, the amount of wax present in the HMA composition preferably ranges from about 15 wt% to about 30 wt%, more preferably from about 20 wt% to about 25 wt%. For an HMA composition used in hygiene applications, the amount of wax present in the HMA composition preferably ranges from 0 wt% to about 20 wt%, more preferably from about 5 wt% to about 10 wt%. Examples of suitable waxes include castor oil derivatives (HCO- waxes), ethylene co-terpolymers, Fischer-Tropsch waxes, microcrystalline waxes, paraffin (petroleum) waxes, polyolefin modified waxes, and polyolefin waxes. Examples of suitable commercially available waxes can be found in the Examples below.

The term "linear alpha olefin" refers to an unbranched alkenic hydrocarbon bearing a carbon-carbon double bond at a terminal (end) carbon atom of a continuous carbon chain without side chain branching. The amount of LAO diluent present in the HMA compositions can range from 0 wt% to about 15 wt%, preferably from about 5 wt% to about 10 wt%. Example of suitable LAOs include C24+ LAOs, with C18+ LAOs having a kinematic viscosity (ASTM D445) of about 4 cSt or less at 135°C being preferred. LAO diluents can be present in combination with a paraffinic hydrocarbon oil and/or paraffinic hydrocarbon wax, e.g., a Fischer-Tropsch wax.

The amount of oil present in the HMA compositions can range from 0 wt% to about 30 wt%, preferably from about 5 wt% to about 20 wt%. Paraffinic hydrocarbon oils (e.g., paraffinic white oils) or naphthenic hydrocarbon oils can be used in combination the LAO diluents disclosed herein. Examples of suitable paraffinic or naphthenic hydrocarbon oils have a Cₙ carbon number distribution and include about 40% branched paraffins or greater, or about 45% branched paraffins or greater, or about 50% branched paraffins or greater, or about 55% branched paraffins or greater, or about 60% branched paraffins or greater, on a weight basis. Examples of suitable commercially available oils can be found in the Examples below.

The term "antioxidant" refers to a substance that inhibits oxidation such as high molecular weight hindered phenols and multifunctional phenols. The amount of antioxidant present in the HMA compositions can range from 0 wt% to about 1 wt%. A suitable commercial antioxidant is Irganox^{™} 1010 hindered phenolic antioxidant commercially available from BASF SE Corporation. Other suitable antioxidants include amines, hydroquinones, phenolics, phosphites, and thioester antioxidants.

Additional details related to HMA composition components and processes for making HMA compositions can be found in U.S. Patent Nos. 10,633,564 and 10,336,921.

### Processes for Making Polymer Blend Compositions

The polymer blend compositions disclosed herein can be made by combining the major polymer fraction, which is made in a first reactor system, with the minor polymer fraction, which is made in a second reactor system parallel to the first reactor system.

The polymerization process can be a solution polymerization process in which the monomer, the comonomer, and the catalyst system are contacted in a solution phase and polymer is formed therein. A solvent can be present during the polymerization process. Suitable solvents for the polymerization process can include non-coordinating, inert liquids. Examples include straight and branched-chain hydrocarbons, such as isobutane, butane, pentane, isopentane, hexane, isohexane, heptane, octane, dodecane, and mixtures thereof; cyclic and alicyclic hydrocarbons, such as cyclohexane, cycloheptane, methylcyclohexane, methylcycloheptane, and mixtures thereof, such as Isopar^{™} commercially available from ExxonMobil; perhalogenated hydrocarbons, such as perfluorinated alkanes, and chlorobenzene; and aromatic and alkylsubstituted aromatic compounds, such as benzene, toluene, mesitylene, and xylene. Suitable solvents can also include liquid olefins, which can act as monomers or comonomers, including ethylene, propylene, 1-butene, 1-hexene, 1-pentene, 3 -methyl- 1-pentene, 4-methyl- 1-pentene, 1-octene, 1-decene, and mixtures thereof. In a preferred embodiment, aliphatic hydrocarbon solvents are used as the solvent, such as isobutane, butane, pentane, isopentane, hexane, isohexane, heptane, octane, dodecane, and mixtures thereof; and cyclic and alicyclic hydrocarbons, such as cyclohexane, cycloheptane, methylcyclohexane, methylcycloheptane, and mixtures thereof. One preferred aliphatic hydrocarbon is Isobar^{™}, i.e., a mixture of alkanes, isoalkanes, and cycloalkanes commercially available from Dow Chemical Company.

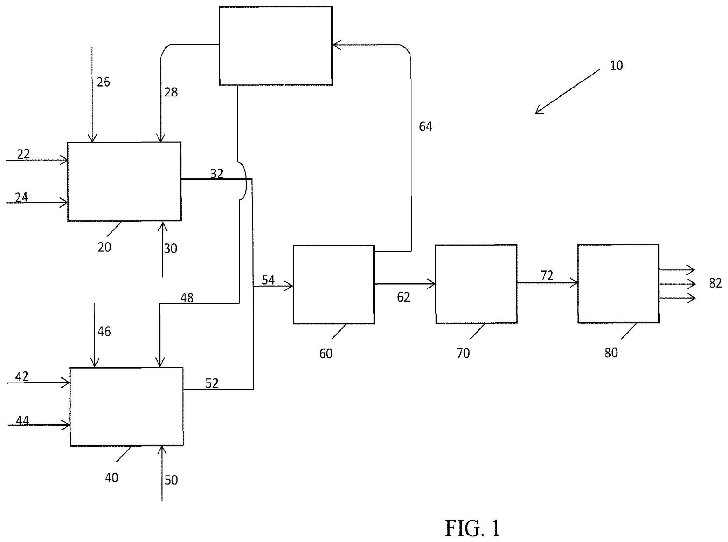

A suitable solution polymerization process for preparing the polymer blend compositions disclosed herein is generally illustrated in FIG. 1 and is described in more detail in U.S. Patent No. 9,359,535. In an exemplary embodiment, the process can be performed by a system 10 that includes a first reactor 20, a second reactor 40 in parallel with the first reactor 20, a liquid-phase separator 60, a devolatilizing vessel 70, and a pelletizer 80. The first reactor 20 and second reactor 40 can be, for example, continuous stirred-tank reactors.

The first reactor 20 can receive a first feed 22 of a monomer, a second feed 24 of at least one other comonomer, and a third feed 26 of a catalyst. The first reactor 20 can also receive feeds of a solvent and an activator. The solvent and/or the activator feed can be combined with any of the first feed 22, the second feed 24, or the third feed 26, or the solvent and activator can be supplied to the reactor in separate feed streams 28, 30. A first polymer, i.e., the major polymer fraction, can be produced in the first reactor 20 and can be evacuated from the first reactor 20 via a first product stream 32. The first product stream 32 can include the first polymer, solvent, and any unreacted monomer and/or comonomer (hereinafter "monomer/comonomer").

The second reactor 40 can receive a fourth feed 42 of the monomer, a fifth feed 44 of the at least one other comonomer, and a sixth feed 46 of the catalyst. The second reactor 40 can also receive feeds of a solvent and activator. The solvent and/or the activator feed can be combined with any of the fourth feed 42, the fifth feed 44, or the sixth feed 46, or the solvent and activator can be supplied to the reactor in separate feed streams 48, 50. A second polymer, i.e., the second polymer fraction, can be produced in the second reactor 40 and can be evacuated from the second reactor 40 via a second product stream 52. The second product stream 52 can include the second polymer, solvent, and any unreacted monomer/comonomer.

It should be appreciated that any number of additional reactors can be employed to produce other polymers that may be blended with the first and second products.

The first product stream 32 and second product stream 52 can be combined to produce a bimodal blend stream 54 in which the first product is the major polymer fraction, and the second product is the minor polymer fraction of the polymer blend composition disclosed herein. For example, the first product stream 32 and second product stream 52 can supply the first and second polymer to a mixing vessel, such as a mixing tank with an agitator, to allow the polymers to be blended.

Next, the bimodal blend stream 54 can be fed to a liquid-phase separation vessel 60 to produce a polymer rich phase and a polymer lean phase. The polymer lean phase can contain solvent and can be substantially free of polymer. At least a portion of the polymer lean phase can be evacuated from the liquid-phase separation vessel 60 via a solvent recirculation stream 64. The solvent recirculation stream 64 can further include unreacted monomer/comonomer. At least a portion of the polymer rich phase can be evacuated from the liquid-phase separation vessel 60 via a polymer rich stream 62.

In any embodiment, the liquid-phase separation vessel 60 can operate on the principle of Lower Critical Solution Temperature (LCST) phase separation. This technique uses the thermodynamic principle of spinodal decomposition to generate two liquid phases; one substantially free of polymer and the other containing the dissolved polymer at a higher concentration than the single liquid feed to the liquid-phase separation vessel 60. As described in U.S. Patent Publication No. 2015/0322303, it has been determined that employing a liquid-phase separation vessel 60 that utilizes spinodal decomposition to achieve the formation of two liquid phases can be an effective method for separating solvent from bimodal polymer blends, particularly in cases in which one of the polymers of the blend has a weight average molecular weight less than 100,000 g/mol, and even more particularly between 10,000 g/mol and 60,000 g/mol. It has also been found that the concentration of polymer in the polymer lean phase can be further reduced by catalyst selection.

Referring back to FIG. 1, upon exiting the liquid-phase separation vessel 60, the polymer rich stream 62 can then be fed to a devolatilizing vessel 70 for further polymer recovery. In any embodiment, the polymer rich stream 62 can also be fed to a low pressure separator before being fed to the inlet of the devolatilizing vessel 70. While in the vessel, the polymer composition can be subjected to a vacuum in the vessel such that at least a portion of the solvent is removed from the polymer composition and the temperature of the polymer composition is reduced, thereby forming a second polymer composition comprising the bimodal polymer blend and having a lower solvent content and a lower temperature than the polymer composition as the polymer composition is introduced into the vessel. The polymer composition can then be discharged from the outlet of the vessel via a discharge stream 72.

The devolatilizing vessel 70 can be a devolatilizing device that is known in the art. Any such device capable of removing solvent from a polymer melt to achieve the evaporative cooling described herein can be used. A more detailed description of the operation of devolatilizing devices suitable for use herein can be found in U.S. Patent Serial No. 12/972, 140. Suitable devolatilizing devices are commercially available from, e.g., LIST USA, Inc.

Referring back to FIG. 1, the cooled discharge stream 72 exiting the devolatilizing vessel 70 can be fed to a pelletizer 80 where the bimodal polymer blend is discharged through a pelletization die as formed pellets 82. Pelletization of the polymer can be by an underwater, hot face, strand, water ring, or other similar pelletizer. Preferably an underwater pelletizer is used, but other equivalent pelletizing units known to those skilled in the art can also be used. General techniques for underwater pelletizing are known to those of ordinary skill in the art. Examples of useful underwater pelletizing devices can be found in U.S. Patent Nos. 7,033, 152; 7,226,553; and 7,470, 118.

### Monomer and Comonomer

The monomer can be or can include propylene (C3), and the at least one other comonomer can be or can include ethylene (C2), a C4 to C20 olefin, or combinations thereof. The olefin comonomer can be linear, branched, or cyclic. Suitable cyclic olefins can be strained or unstrained, monocyclic or polycyclic, and can optionally include heteroatoms and/or one or more functional groups. The comonomer is preferably C2 or a C4 to C10 α-olefin. The comonomer concentration in the first reactor can range from about 10 wt% to about 20 wt%, preferably from about 14 wt% to about 16 wt%, and the comonomer concentration in the second reactor system can range from about 2 wt% to about 6 wt%, preferably from about 3 wt% to about 5 wt%.

Specific examples of suitable comonomers besides ethylene include butene, pentene, hexene, heptene, octene, nonene, decene, undecene, dodecene, norbornene, norbomadiene, dicyclopentadiene, cyclopentene, cycloheptene, cyclooctene, cyclooctadiene, cyclododecene, 7-oxanorbornene, 7-oxanorbomadiene, substituted derivatives thereof, and isomers thereof, preferably hexene, heptene, octene, nonene, decene, dodecene, cyclooctene, 1,5-cyclooctadiene, l-hydroxy-4-cyclooctene, 1-acetoxy-4-cyclooctene, 5-methylcyclopentene, cyclopentene, dicyclopentadiene, norbornene, norbomadiene, and their respective homologs and derivatives, preferably norbornene, norbomadiene, and dicyclopentadiene.

### The Catalyst System

The polymer blend compositions disclosed herein can be prepared using one or more catalyst systems. As used herein, a "catalyst system" includes at least a transition metal compound, also referred to as catalyst precursor, and at least one activator. Contacting the transition metal compound (catalyst precursor) and the activator in solution upstream of each polymerization reactor or in each polymerization reactor can yield the catalytically active component (catalyst) of the catalyst system. Any given transition metal compound or catalyst precursor can yield a catalytically active component (catalyst) with various activators, affording a wide array of catalysts deployable in the processes provided herein. Such catalyst systems can optionally include impurity scavengers. Each of these components is described in further detail below.

Any metallocene catalyst commonly known in the art can be employed as the catalyst. A suitable metallocene catalyst can be bridged bisindenyl metallocene having the general formula (In¹)Y(In²)MX2, where In¹ and In² are identical substituted or unsubstituted indenyl groups bound to M and bridged by Y, Y is a bridging group in which the number of atoms in the direct chain connecting In¹ with In² is from 1 to 8, and the direct chain comprises C, Si, or Ge; M is a Group 3, 4, 5, or 6 transition metal; and X2 are leaving groups. In¹ and In² can be substituted or unsubstituted. If In¹ and In² are substituted by one or more substituents, the substituents can be selected from the group consisting of a halogen atom, C1 to C10 alkyl, C5 to C15 aryl, C6 to C25 alkylaryl, and Si-, N- or P- containing alkyl or aryl. Each leaving group X can be an alkyl, preferably methyl, or a halide ion, preferably chloride r fluoride. Exemplary metallocene compounds of this type include µ-dimethylsilylbis(indenyl) hafnium dimethyl and µ-dimethylsilylbis(indenyl) zirconium dimethyl.

In any embodiment, the metallocene compound can be a bridged bisindenyl metallocene having the general formula (In¹)Y(In²)MX2, where In¹ and In² are identical 2,4-substituted indenyl groups bound to M and bridged by Y, Y is a bridging group in which the number of atoms in the direct chain connecting In¹ with In² is from 1 to 8 and the direct chain comprises C, Si, or Ge, M is a Group 3, 4, 5, or 6 transition metal, and X2 are leaving groups. In¹ and In² are substituted in the 2 position by a C1 to C10 alkyl, preferably a methyl group and in the 4 position by a substituent selected from the group consisting of C5 to C15 aryl, C6 to C25 alkylaryl, and Si-, N- or P-containing alkyl or aryl. Each leaving group X can be an alkyl, preferably methyl, or a halide ion, preferably chloride or fluoride. Exemplary metallocene compounds of this type include (dimethylsilyl)bis(2-methyl-4-(3,'5'-di-tert-butylphenyl)indenyl) zirconium dimethyl, (dimethylsilyl)bis(2-methyl-4-(3,'S'-di-tert-butylphenyl)indenyl) hafnium dimethyl, (dimethylsilyl)bis(2-methyl-4-naphthylindenyl) zirconium dimethyl, (dimethylsilyl)bis(2-methyl-4-naphthylindenyl) hafnium dimethyl, (dimethylsilyl)bis(2-methyl-4-(N-carbazyl)indenyl) zirconium dimethyl, and (dimethylsilyl)bis(2-methyl-4-( -carbazyl)indenyl) hafnium dimethyl.

A particularly advantageous catalyst that can be employed in any embodiment is illustrated in Formula I below:

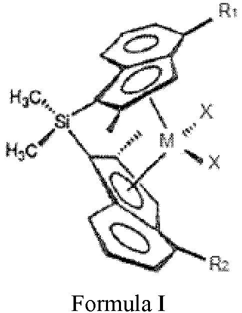

In any embodiment, M is a Group IV transition metal atom, preferably a Group IVB transition metal, more preferably hafnium or zirconium, and X are each an alkyl, preferably methyl, or a halide ion, preferably chloride or fluoride. Methyl or chloride leaving groups are most preferred. In any embodiment, RI and R2 can be independently selected from the group consisting of hydrogen, phenyl, and naphthyl. RI is preferably the same as R2. Particularly advantageous species of Formula I are dimethylsilyl bis(2-methyl-4-phenylindenyl) zirconium dichloride, dimethylsilyl bis(2-methyl-4-phenylindenyl) zirconium dimethyl, dimethylsilyl bis(2-methyl-4-phenylindenyl) hafnium dichloride, and dimethylsilyl bis(2-methyl-4-phenylindenyl) hafnium dimethyl.

Another advantageous catalyst that can be employed in any embodiment is illustrated in Formula II.

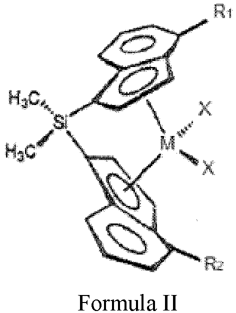

In any embodiment, M is a Group IV transition metal atom, preferably a Group IVB transition metal, more preferably hafnium or zirconium, and X are each an alkyl, preferably methyl, or a halide ion, preferably chloride or fluoride. Methyl or chloride leaving groups are most preferred. In any embodiment, Rl and R2 can be independently selected from the group consisting of hydrogen, phenyl, and naphthyl. Rl is preferably the same as R2. Particularly advantageous species of Formula II are dimethylsilylbis (indenyl) hafnium dimethyl, dimethylsilylbis (indenyl) hafnium dichloride, dimethylsilylbis (indenyl) zirconium dimethyl, and dimethylsilylbis (indenyl) zirconium dichloride.

In any embodiment, the activators of the catalyst systems can include a cationic component. In any embodiment, the cationic component can have the formula [R¹R²R³AH]⁺, where A is nitrogen, R¹ and R² are together a -(CH₂)ₐ- group, where a is 3, 4, 5, or 6 and form, together with the nitrogen atom, a 4-, 5-, 6-, or 7-membered non-aromatic ring to which, via adjacent ring carbon atoms, optionally one or more aromatic or heteroaromatic rings can be fused, and R³ is C1, C2, C3, C4, or C5 alkyl, or N-methylpyrrolidinium or N-methylpiperidinium. Alternatively, in any embodiment, the cationic component can have the formula [RₙAH4_ₙ]⁺, where A is nitrogen, n is 2 or 3, and all R are identical and are C1 to C3 alkyl groups, such as trimethylammonium, trimethylanilinium, triethylammonium, dimethylanilinium, and dimethylammonium.

Any catalyst system resulting from any combination of a metallocene compound, a cationic activator component, and an anionic activator component provided herein shall be considered to be explicitly disclosed herein. Also, combinations of two different activators can be used with the same or different metallocene(s).

In any embodiment, the activators of the catalyst systems disclosed herein can include an anionic component, [Y]. In any embodiment, the anionic component can be a non-coordinating anion (NCA), having the formula [B(R⁴)₄]⁻ , where R⁴ is an aryl group or a substituted aryl group, of which the one or more substituents are identical or different and are selected from the group consisting of alkyl, aryl, a halogen atom, halogenated aryl, and haloalkylaryl groups. The substituents can be perhalogenated aryl groups, or perfluorinated aryl groups, including, perfluorophenyl, perfluoronaphthyl and perfluorobiphenyl.

Together, the cationic and anionic components of the catalysts systems disclosed herein form an activator compound. In any embodiment, the activator can be N,N-dimethylaniliniumtetra(perfluorophenyl)borate, N,N-dimethylanilinium-tetra(perfluoronaphthyl)borate, N,N-dimethylanilinium-tetrakis(perfluorobiphenyl)borate, N,N-dimethylanilinium-tetrakis(3,5-bis(trifluoromethyl)phenyl)borate, triphenylcarbenium-tetra(perfluorophenyl)borate, triphenylcarbenium-tetra(perfluoronaphthyl)borate, triphenylcarbeniumtetrakis(perfluorobiphenyl)borate, or triphenylcarbenium-tetrakis(3,5-bis(trifluoromethyl)phenyl)borate.

A non-coordinating anion activator can be employed with the catalysts of Formula I and Formula II. A particularly advantageous activator is dimethylaniliniumtetrakis(heptafluoronaphthyl) borate.

Additional disclosure regarding suitable catalyst systems can be found in International Patent Publication WO/2013/134038.

### Examples:

The foregoing discussion can be further described with reference to the following nonlimiting examples.

Propylene-ethylene copolymers (Examples 1-6) were produced using two lab-scale continuous reactors in parallel mode as follows. A feed stream of propylene with a feed stream of ethylene comonomer in the presence of rac-dimethylsilyl-bis(indenyl)hafnium dimethyl and dimethylaniliniumtetrakis(heptafluoronaphthyl) borate as the catalyst and activator, respectively, were subjected to propylene polymerization conditions in each reactor to produce two C3-C2 copolymers at a weight ratio of 70 to 30 (first reactor production: second reactor production). The streams exiting each reactor were combined to produce a product stream containing the major polymer fraction and the minor polymer fraction of a C3-C2 polymer blend composition. The product stream containing 9-16% polymer by weight was then heated to between about 200°C and about 205°C at a pressure of about 110.3 barg (1600 psig). Subsequently, the stream was fed to a high-pressure separator where the operating pressure was 41.4 barg (600 psig). The drop in pressure induced the stream to a two phase region beyond the lower critical solution temperature, separating the product into two liquid phases based on density. After settling, the product stream separated into a polymer rich phase that exited the bottom of the high-pressure separator and a polymer lean phase that exited overhead in the high-pressure separator. The polymer rich phase was introduced to a pelletizer to form pellets containing the final polymer blend composition, and the polymer lean phase was recycled was back to the reactors. For Ex.1-6, the comonomer (C2) content of the C3-C2 copolymer produced in each reactor, the melt flow rate (MFR) of the C3-C2 copolymer produced in the first reactor, and the MFR and/or Brookfield Viscosity (BV) at 190°C of the C3-C2 copolymer produced in the second reactor were determined (not shown). Also, the difference between the C2 contents of the C3-C2 copolymers produced in each reactor (ΔC2), the C2 content of the final polymer pellets, and the MFR of the final polymer pellets were determined (not shown).

The procedure described above for preparing the polymer blend compositions of Ex.1-6 was repeated four times (Comparative Example 1-4) with the exception that the amount of C2 fed to each reactor was controlled such that ΔC2 was greater for Ex.1-6 than for C.Ex.1-4. The same properties determined for Ex.1-6 were also determined for C.Ex.1-4 (not shown). Additionally, C3-C2 copolymers (not blends) commercially available from ExxonMobil, which have a narrow MWD and nearly uniform distribution of C2 comonomer across the molecular weights of the polymer chain, were obtained for comparison purposes (Comparative Examples 5 and 6). The C2 content and MFR values of the copolymers of C.Ex.5-6 were determined (not shown).

Table 1 - deleted

For C.Ex.1-4, the MFRs for the C3-C2 copolymers produced in reactor 1 are widely different from those produced in reactor 2; however, the C2 content differences between the copolymers produced in reactor 1 and those produced in reactor 2 vary only by about 4 to 5 wt%. For Ex.1-6, not only are the MFRs widely different but also the C2 content differences between the copolymers produced in reactor 1 and those produced in reactor 2 are greater than 9 wt%.

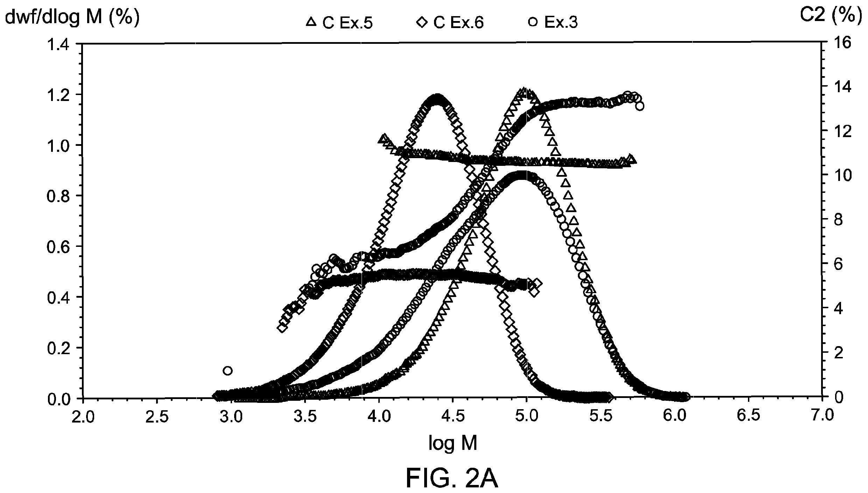

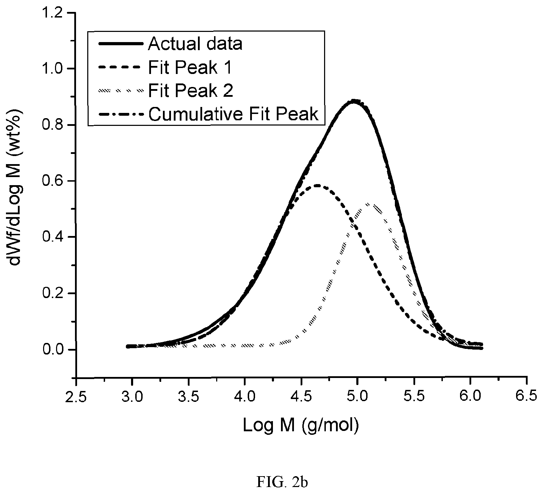

FIG. 2a depicts graphs of the molecular weight distributions and comonomer distributions of the C3-C2 blend compositions produced in Ex.3 (12.4 wt% C2, 87 MFR) and the commercial C3-C2 copolymer pellets of C.Ex.5 (13.3 wt% C2, 45 MFR) and C.Ex.6 (6 wt% C2, 1200 MFR), as determined using GPC-4D. Both commercial grades have a unimodal MWD while the inventive blend composition of Ex.3 clearly exhibited bimodal MWD, as shown in FIG. 2b with the curve fitting of peak 1 and peak 2 with its molecular weight moments. Surprisingly, the blend composition of Ex.3 displayed a broad, nonuniform orthogonal distribution of C2 across the molecular weight range. In contrast, the commercial grades exhibited nearly uniform comonomer distribution of C2 comonomer across the molecular weight range, as indicated by horizontal lines in FIG. 2a. Thus, it is believed that for the inventive blend compositions of Ex.1-6, the high molecular weight chains had high C2 content while the low molecular weight chains had low C2 content. Such molecular architecture was unexpected for C3-based elastomers.

As depicted in Table 2, the molecular weight moments and comonomer distribution (CD) slopes of the blend compositions of Ex.1-6 and C.Ex.1-4 and of the commercial grades of C.Ex.5-6 were also determined. The CD slopes were determined by first curve fitting the comonomer content versus molecular weight variation to a nth order polynomial using the MATLAB program. The value of n ranges was typically between 2 and 4. The derivative of the curve was obtained at various molecular weight points, which are 50%, 75% and 90%, respectively, of the range of molecular weight. For example, to determine the 50% point on the x-axis, the difference between the molecular weight minimum (Mw^{min}) and molecular weight maximum (Mw^{max}) for the specific data set was first established. The xvalue of slope 50 was calculated as Mw^{min} + 0.50*(Mw^{max}-Mw^{min}). The absolute value of the derivative was determined at that point to find slope 50. Slope values ranging from 0 to 2 were considered to represent a uniform comonomer distribution, whereas slopes >2 were considered to represent a non-uniform comonomer distribution. The polymer blend compositions of Ex.1-6 surprisingly showed a decreasing trend in slope from slope 50 to slope 90, indicating a broad orthogonal distribution of the comonomer, where the high molecular weight chains have higher comonomer content while the low molecular weight chains have lower comonomer content. The blend compositions of Ex.3 and Ex.6 unexpectedly exhibited broad MWDs of 3.0 or greater.

**Table 2: Molecular Weight Moments and CD Slopes for Ex. 1-6 and C.Ex.1-6**

| | Mn (g/mol) | Mw (g/mol) | Mw/Mn | CD Slope 50 | CD Slope 75 | CD Slope 90 |
|---|---|---|---|---|---|---|
| C.Ex.5 | 13000 | 26000 | 2.1 | 0.2 | 0.9 | 1.1 |
| C.Ex.6 | 54000 | 115000 | 2.2 | 0.3 | 0 | 0 |
| C.Ex.1 | 39000 | 98500 | 2.5 | 1.3 | 0.3 | 1.5 |
| C.Ex.2 | 39600 | 99700 | 2.5 | 0.6 | 1.4 | 1.5 |
| C.Ex.3 | 40300 | 103800 | 2.6 | 1.0 | 1.5 | 1.2 |
| C.Ex.4 | 35400 | 98200 | 2.8 | 2.0 | 2.0 | 0.9 |
| Ex.1 | 35300 | 97200 | 2.8 | 3.5 | 3.0 | 1.5 |
| Ex.2 | 35700 | 95500 | 2.7 | 4.1 | 4 | 2.6 |
| Ex.3 | 29900 | 100500 | 3.4 | 6.9 | 3.9 | 0.7 |
| Ex.4 | 39290 | 90931 | 2.3 | 3.9 | 3.2 | 2.0 |
| Ex.5 | 34908 | 95237 | 2.7 | 6.6 | 3.4 | 0.9 |
| Ex.6 | 32719 | 97062 | 3.0 | 7.2 | 3.4 | 1.7 |

As illustrated in Table 3 below, the polymer blend composition of Ex.3 was analyzed by Temperature Rising Elution Fractionation (TREF) for comparison with the TREF-GPC data of Polymers A, B, and C (Comparative Examples 7, 8, and 9) in U.S. Patent No. 9,359,535. All of the examples exhibited a soluble fraction and one or two crystallized (insoluble) fractions. Each temperature in Table 3 represents the elution temperature of the fraction. The parenthesis next to the elution temperature indicates the amount of the polymer present in the fraction (wt%) and the Mw and MWD (Mw/Mn) of that fraction at this elution temperature. The soluble fraction of each polymer of C.Ex.7-9 each had a lower Mw than did the insoluble fraction(s), whereas the soluble fraction of the polymer blend composition of Ex.3 had a much higher Mw than did the insoluble fractions.

**Table 3: TREF-GPC Data for Ex.3 and C.Ex.7-9**

| | Soluble Fraction | Crystallized Fraction 1 | Crystallized Fraction 2 |
|---|---|---|---|
| C.Ex.7 | -15°C (Area=11.8 %; Mw=6.2k, Mw/Mn=8.0) | 39°C (Area=88.2 %; Mw=29 k, Mw/Mn=1.8) | |
| C.Ex.8 | -15°C (Area=75.9 %; Mw=21k, Mw/Mn=4.7) | 11°C (Area=24.1 %; Mw=30 k, Mw/Mn=1.8) | |
| C.Ex.9 | -15°C (Area=55.1 %; Mw=26k, Mw/Mn=4.2) | 12°C (Area=13.5 %; Mw=34 k, Mw/Mn=2.2) | 66°C (Area=31.4 %; Mw=53 k, Mw/Mn=3.2) |
| Ex.3 | -15°C (Area=72 %; Mw=125k, Mw/Mn=8.1) | 18.7°C (Area=5.9 %; Mw=51 k, Mw/Mn=6.5) | 61.2°C (Area=22.1 %; Mw=43 k, Mw/Mn=2.7) |

As depicted in Table 4, the non-isothermal crystallization temperature (Tc) and melting temperature (Tₘ) as well as the isothermal crystallization half-times (t_{1/2}) at 5°C, 7°C, and 10°C were measured by Differential Scanning Calorimetry (DSC) for the polymer blend compositions of Ex.1-3 and C.Ex.1-4 and for the polymers of C.Ex.5-6. The presence of low molecular weight and low C2 fraction in the polymer blend compositions of Ex.1-3 lead to these inventive compositions having relatively higher Tₘ and T_{c} values than those of the polymers of C.Ex.1-6. The presence of the low C2 fraction also provided for faster crystallization rate as indicated by the significant decrease in crystallization half-time at 5°C, 7°C and 10°C. The crystallization rate of the blend composition of Ex.3 was about 10 times faster than that of the commercial grade of C.Ex.6, which is advantageous in certain applications.

**Table 4: Isothermal and Non-Isothermal DSC Data for Ex.1-3 and C.Ex.1-6**

| | DSC (Isothermal) | | | DSC (Non-isothermal) | |
|---|---|---|---|---|---|
| | t_{1/2} @ 5°C (min) | t_{1/2} @ 7°C (min) | t_{1/2} @ 5°C (min) | T_{c} (°C) | Tₘ (°C) |
| C.Ex.5 | | | | 50.0 | 94.0 |
| C.Ex.6 | 4.762 | 4.292 | 5.175 | | 55.6 |
| C.Ex.1 | 2.003 | 1.624 | 1.279 | 21.1 | 72.9 |
| C.Ex.2 | 1.578 | 1.179 | 1.039 | 25.6 | 75.8 |
| C.Ex.3 | 1.943 | 1.576 | 1.504 | 20.3 | 71.9 |
| C.Ex.4 | 2.133 | 1.684 | 1.564 | 19.6 | 72.0 |
| Ex.1 | 0.687 | 0.682 | 1.273 | 49.5 | 96.7 |
| Ex.2 | 0.938 | 0.867 | 0.819 | 53.5 | 99.3 |
| Ex.3 | 0.720 | 0.552 | 0.540 | 52.8 | 99.6 |

The isotactic (mm) triad tacticity and the regio defects (sequence lengths) of the C3-C2 copolymers formed in reactor R1 and reactor R2 (i.e., the major and minor polymer fractions of the polymer blend compositions, respectively) of Ex.4-6 were determined by¹³C NMR. The endothermic Tₘ and the heat of fusion (H_{f}) of these C3-C2 polymers were also determined by DSC. This data is provided in Table 5 below. The tacticity of the different fractions formed in reactors R1 and R2 have an overall effect on the crystallinity of the final polymer blend compositions. The tacticity of the R1 fraction was either equivalent or greater than the tacticity of the R2 fraction, which is different than exhibited by Polymer C of U.S. Patent No. 9,359,535 (see Table 4 and claim 1). Also, the amount of regio defects in the R2 fractions was significantly lower than the amount of regio defects in the R1 fractions, which helped achieve higher Tₘ in the blend compositions, leading to better pellet stability. The H_{f} values were much higher for the R2 fractions than for the R1 fractions. Since heat of fusion is an indicator of crystallinity, this trend shows that the R2 fractions had higher crystallinity than the R1 fractions.

**Table 5: Additional Properties for Ex.4-6**

| | Tacticity (mol% mm) | | Regio Defects (mol%) | | Tₘ (°C) / H_{f} (J/g)ₘ | |
|---|---|---|---|---|---|---|
| | R1 | R2 | R1 | R2 | R1 | R2 |
| Ex.1 | 88.3 | 88.5 | 0.59 | 0.45 | 51/8 | 105/38 |
| Ex.2 | 90.9 | 88.3 | 0.64 | 0.44 | 52/9 | 106/60 |
| Ex.3 | 89.3 | 88.5 | 0.65 | 0.52 | 52/10 | 102/43 |

The polymer blend compositions formed in Examples 2, 4, 5, and 6 were used to make four different carpet backing formulations (Examples 7, 8, 9, and 10) without being blended with any other C3-based polymers. For comparison purposes, a carpet backing formulation containing three C3-based polymers (Vistamaxx^{™} 6502, Vistamaxx^{™} 8880, and Achieve^{™} Advanced PP6936G2, all commercially available from ExxonMobil) (Comparative Example 10) were made. Other ingredients in the carpet backing formulations of Ex.7-10 and C.Ex.10 were the same and are shown in Table 6 below. Note that Exxelor^{™} PE1040 coupling agent and Escorez^{™} 1315 tackifier are commercially available from ExxonMobil, Ampacet 19470 PE black masterbatch is commercially available from Ampacet Corporation, and Lhoist-325 high calcium limestone is commercially available from the Lhoist Group. Various physical properties of the carpet backing formulations were measured and are tabulated in Table 6. The carpet backing formulations of Ex.8-10 exhibited an excellent balance of flow properties and mechanical performance comparable to those of the carpet backing formulation of C.Ex.7. The carpet backing formulations of Ex.8-10 did not require the use of multiple conveyors to transport the commercial grade C3-based polymers contained therein as did the carpet backing formulation of C.Ex.7, making the inventive carpet backing formulations much less expensive to produce. Surprisingly, the carpet backing formulations of Ex.8-10 exhibited significantly better low growth forces (less than 2.1 bar (30 psi)) than the carpet backing formulations of C.Ex.7.

**Table 6: Compositions and Properties of the Formulations of Ex.7-10 and C.Ex.7**

| | C.Ex.10 | Ex.7 | Ex. 8 | Ex.9 | Ex.10 |
|---|---|---|---|---|---|
| Composition of Ex.2 (wt%) | 0 | 22.90 | 0 | 0 | 0 |
| Composition of Ex.4 (wt%) | 0 | 0 | 22.90 | 0 | 0 |
| Composition of Ex.5 (wt%) | 0 | 0 | 0 | 22.90 | 0 |
| Composition of Ex.6 (wt%) | 0 | 0 | 0 | 0 | 22.90 |
| Vistamaxx^{™} 6502 (wt%) | 18.25 | 0 | 0 | 0 | 0 |
| Vistamaxx^{™} 8880 (wt%) | 4.15 | 0 | 0 | 0 | 0 |
| Achieve^{™} 6936G2 PP (wt%) | 1.00 | 0 | 0 | 0 | 0 |
| Exxelor^{™} PE1040 (wt%) | 2.00 | 2.50 | 2.50 | 2.50 | 2.50 |
| Escorez^{™} 1315 (wt%) | 4.50 | 4.50 | 4.50 | 4.50 | 4.50 |
| Ampacet 19470 PE (wt%) | 0.10 | 0.10 | 0.10 | 0.10 | 0.10 |
| Lhoist-325 (CaCO₃) (wt%) | 70.00 | 70.00 | 70.00 | 70.00 | 70.00 |
| Viscosity at Shear Rate of 200 s⁻¹ (Pa-s) | 363 | 382 | 377 | 386 | 367 |
| Viscosity at Shear Rate of 300 s⁻¹ (Pa-s) | 299 | 318 | 318 | 320 | 295 |
| Flexural Modulus, 1% Secant (bar (psi)) | 2868.2 (41600) | 2840.6 (41200) | 2302.8 (33400) | 2757.9 (40000) | 2764.8 (40100) |
| Growth Force (bar (psi)) | 2.1 (31) | 2.3 (34) | 1.4 (20) | 1.4 (21) | 1.8 (26) |

The polymer blend composition formed in Ex.5 was used to make two different hot melt adhesive (HMA) formulations (Examples 11 and 12), one of which contained Vistamaxx^{™} 8380 low viscosity C3/C2 copolymer (Ex.11), and one of which contained Vistamaxx^{™} 8780 low viscosity C3/C2 copolymer (Ex.12). For comparison with Ex.11, two HMA formulations were prepared (Comparative Example 8 and 9), one of which contained only Vistamaxx^{™} 8380 (C.Ex.8), and one of which contained both Vistamaxx^{™} 8380 and Vistamaxx^{™} 6502 high viscosity C3/C2 copolymer (C.Ex.9). For comparison with Ex.12, an HMA formulation was prepared that contained Vistamaxx^{™} 8780 (Comparative Example 10). Other ingredients in the HMA formulations of Ex.11-12 and C.Ex.8-10 are shown in Table 7 below. Note that Escorez^{™} 5400 hydrogenated tackifier, Primol^{™} 352 oil, and Parvan 1580 paraffin wax are commercially available from ExxonMobil and Irganox^{™} 1010 antioxidant is commercially available from BASF SE Corp. Various physical properties of the HMA formulations were measured and are presented in Table 7, including the softening point (SP) of the tackifier. Adding the polymer blend formulation of Ex.5 in place of Vistamaxx^{™} 6502 to the HMA formulation of Ex.11 improved the HMA viscosity compared to C.Ex.9, providing for lower temperature applications. The HMA formulation of Ex. 11 also unexpectedly exhibited a higher peel strength than the HMA formulations of C.Ex.8-9. The addition of the polymer blend formulation from Ex.5 and of paraffin wax surprisingly increased the peel strength of the HMA formulation of Ex.12.

**Table 7: Compositions and Properties of Formulations of Ex.11-12 and C.Ex.8-10**

| | C.Ex.8 | C.Ex.9 | Ex.11 | C.Ex. 10 | Ex.12 |
|---|---|---|---|---|---|
| Vistamaxx^{™} 8380 (wt%) | 49.5 | 44.5 | 44.5 | | |
| Vistamaxx^{™} 6502 (wt%) | | 5.0 | | | |
| Composition of Ex.5 (wt%) | | | 5.0 | | 10.0 |
| Vistamaxx^{™} 8780 (wt%) | | | | 69.5 | 59.5 |
| Escorez^{™} 5400 (wt%) (100°C SP) | 40.0 | 40.0 | 40.0 | 20.0 | 20.0 |
| Primol^{™} 352 (wt%) | 10.0 | 10.0 | 10.0 | | |
| Parvan 1580 (wt%) | | | | 10.0 | 10.0 |
| Irganox^{™} 1010 (wt%) | 0.5 | 0.5 | 0.5 | 0.5 | 0.5 |
| Peel strength after 24 h (TMAL-11/grams) | 149 | 126 | 152 | 147 | 176 |
| Viscosity (mPa·s @ 140°C) (TMAL-01/grams) | 6313 | 10250 | 9200 | 5575 | 11130 |
| Viscosity (mPa·s @ 150°C) (TMAL-01/grams) | 4463 | 7150 | 6400 | | 8723 |
| Viscosity (mPa·s @ 160°C) (TMAL-01/grams) | 3238 | 5912 | 4563 | | 6113 |

The polymer blend composition formed in Ex.5 was used to make two different HMA formulations (Examples 13 and 14), which contained Vistamaxx^{™} 8380 low viscosity C3/C2 copolymer. For comparison with Ex.13-14, an HMA formulations was prepared that contained Vistamaxx^{™} 8380 as the only C3-based copolymer (Comparative Example 11). As shown in Table 8 below, other ingredients in the HMA formulations of Ex. 13-14 and C.Ex11 were the same except that the formulation of Ex.14 included Escorez^{™} 5615 tackifier (a hydrogenated tackifier with high softening point (SP) and high aromaticity, which is commercially available from ExxonMobil) and the formulations of Ex.13 and C.Ex.11 included Eastotac^{™} H-130W tackifier (a hydrogenated C5 tackifier with high SP commercially available from Eastman Chemical Company). Note that Epolene^{™} C-13 is a branched low density polyethylene homopolymer commercially available from Westlake Chemical. Various physical properties of the HMA formulations were measured and are presented in Table 8. Adding the polymer blend formulation of Ex.5 to the HMA formulations of Ex.13-14 unexpectedly improved peel strength.

**Table 8: Compositions and Properties of the Formulations of Ex.13-14 and C.Ex.11**

| | C.Ex.11 | Ex.13 | Ex.14 |
|---|---|---|---|
| Vistamaxx^{™} 8380 (wt%) | 40.0 | 20.0 | 20.0 |
| Composition of Ex.5 (wt%) | | 20.0 | 20.0 |
| Eastotac^{™} H-130W (wt%) (130°C SP) | 37.0 | 37.0 | |
| Escorez^{™} 5615 (wt%) (11% aromaticity; 120°C SP) | | | 37.0 |
| Primol^{™} 352 (wt%) | 20.0 | 20.0 | 20.0 |
| Epolene^{™} C-13 (wt%) | 2.0 | 2.0 | 2.0 |
| Irganox^{™} 1010 (wt%) | 0.5 | 0.5 | 0.5 |
| T peel @ RT (1 day conditioning @ RT) (TMAL-11/grams) | 85 | 129 | 122 |
| Viscosity (mPa·s @ 140°C) (TMAL-01/grams) | 3900 | 16040 | 15690 |
| Viscosity (mPa·s @ 150°C) (TMAL-01/grams) | 2675 | 12080 | 11090 |
| Viscosity (mPa·s @ 160°C) (TMAL-01/grams) | 1950 | 8480 | 8050 |

The polymer blend composition formed in Ex.5 was used to make two different HMA formulations (Examples 15 and 16), one of which contained Vistamaxx^{™} 6502 (Ex. 16), and one of which was not mixed with any other polymers (Ex. 15). For comparison with Ex.15-16, an HMA formulation was prepared that contained Vistamaxx^{™} 6502 as the only C3-based polymer (Comparative Example 12). As shown in Table 9 below, all other ingredients in the HMA formulations of Ex. 15-16 and C.Ex12 were the same. Note that Escorez^{™} 2203 non-hydrogenated C5/C9 tackifier is commercially available from ExxonMobil, Nyflex 223B oil is commercially available from Nynas AB, and Sasolwax^{™} H1 is commercially available from Sasol Chemicals. Various physical properties of the HMA formulations were measured and are tabulated in Table 9. Adding the polymer blend formulation of Ex.5 to the HMA formulations of Ex.15-16 improved the HMA viscosity compared to C.Ex.12, providing for lower temperature applications. Surprisingly, using a combination of the polymer blend formulation of Ex.5 and Vistamaxx^{™} 6502 (Ex.16) improved the peel strength of the HMA formulation of Ex.16.

**Table 9: Compositions and Properties of the Formulations of Ex.15-16 and C.Ex.12**

| | C.Ex.12 | Ex.15 | Ex.16 |
|---|---|---|---|
| Vistamaxx^{™} 6502 (wt%) | 20.0 | | 20.0 |
| Composition of Ex.5 (wt%) | | 20.0 | 10.0 |
| Escorez^{™} 2203 (wt%) (93°C SP) | 56.5 | 56.5 | 56.5 |
| Nyflex^{™} 2238 (wt%) | 20.0 | 20.0 | 20.0 |
| Sasolwax^{™} H1 (wt%) | 3.0 | 3.0 | 3.0 |
| Irganox^{™} 1010 (wt%) | 0.5 | 0.5 | 0.5 |
| T peel @ RT (1 day conditioning @ RT) (TMAL-11/grams) | 141 | 136 | 155 |
| Viscosity (mPa·s @ 140°C) (TMAL-01/grams) | 7213 | 4363 | 6060 |
| Viscosity (mPa·s @ 150°C) (TMAL-01/grams) | 4912 | 3100 | 4300 |
| Viscosity (mPa·s @ 160°C) (TMAL-01/grams) | 3510 | 2210 | 3175 |

The polymer blend composition formed in Ex.5 was used to make three different HMA formulations (Examples 17-19). The HMA formulation of Ex.19 contained Aerefin^{™} 180 C3-based polymer commercially available from Eastman Chemical Company, whereas the HMA formulations of Ex.17-18 contained different amounts of REXtac^{™} amorphous polyalphaolefin (APAO) commercially available from REXtac LLC. For comparison with Ex.17-18, an HMA formulation was prepared that contained REXtac^{™} APAO. The other ingredients employed in the HMA formulations of Ex.17-19 and C.Ex13 are shown in Table 10 below. Note that Escorez^{™} 5637 is a hydrogenated aromatic tackifier with high SP commercially available from ExxonMobil and Regalite^{™} R1090 tackifier is a C9-based hydrogenated tackifier commercially available from Eastman Chemical Company. Various physical properties of the HMA formulations were measured and are presented in Table 10. Including the polymer blend formulation of Ex.5 with a significant amount of APAO in the HMA formulation of Ex.18 yielded a much higher peel strength.

**Table 10: Compositions and Properties of the Formulations of Ex.17-19 and C.Ex.13**

| | C.Ex.13 | Ex.17 | Ex.18 | Ex.19 |
|---|---|---|---|---|
| Composition of Ex.5 (wt%) | | 20.0 | 10.0 | 20.0 |
| REXtac^{™} 2730 (wt%) | 69.5 | 10.0 | 60.0 | |
| Aerefin^{™} 180 (wt%) | | | | 20.0 |
| Escorez^{™} 5400 (wt%) (100° SP) | | 49.5 | | |
| Regalite^{™} R1090 (wt%) (88°C SP) | | | | 48.5 |
| Escorez^{™} 5637 (wt%) (130°C SP) | 30.0 | | 29.5 | |
| Primol^{™} 352 (wt%) | | 20.0 | | 10.5 |
| Irganox^{™} 1010 (wt%) | 0.5 | 0.5 | 0.5 | 0.5 |
| T peel @ RT (1 day conditioning @ RT) TMAL-11/grams | 141 | 118 | 235 | 166 |
| Viscosity (mPa·s @ 140°C) (TMAL-01/grams) | 9750 | 7875 | 20300 | 18130 |
| Viscosity (mPa·s @ 150°C) (TMAL-01/grams) | | 5525 | 13050 | 12480 |
| Viscosity (mPa·s @ 160°C) (TMAL-01/grams) | 4860 | 4008 | 9230 | 10280 |

The polymer blend composition formed in Ex.5 was used to make two different HMA formulations (Examples 20 and 21), one of which contained Vistamaxx^{™} 8880 (Ex.20), and one of which contained both Vistamaxx^{™} 8880 and Vistamaxx^{™}6502 (Ex.21). An HMA commercially available from HB Fuller Company, i.e., HL 1486 (Comparative Example 14), was obtained for comparison with Ex.20-21. As shown in Table 11 below, the HMA formulations of Ex.20 and Ex.21 contained different tackifiers and different oils but the same antioxidant. Also, the HMA formulation of Ex.20 included a C24+ linear alpha olefin (LAO) whereas the HMA formulation of Ex.21 did not include an LAO. Various physical properties of the HMA formulations were measured and are tabulated in Table 11. Adding the polymer blend formulation of Ex.5 to the HMA formulations of Ex.20 improved the HMA viscosity at 140°C and 150°C compared to C.Ex.14.

**Table 11: Compositions and Properties of the Formulations of Ex.20-21 and C.Ex.14**

| | C.Ex.14 | Ex.20 | Ex.21 |
|---|---|---|---|
| HL 1486 | 100.0 | | |
| Composition of Ex.5 (wt%) | | 15.0 | 7.0 |
| Vistamaxx^{™} 8880 (wt%) | | 20.0 | 14.0 |
| Vistamaxx^{™} 6502 (wt%) | | | 9.0 |
| Escorez^{™} 5400 (wt%) (100°C SP) | | 55.0 | |
| Eastotac^{™} H-130W (wt%) (130°C SP) | | | 59.5 |
| Primol^{™} 352 (wt%) | | | 10.0 |
| Nyflex^{™} 223B (wt%) | | 4.5 | |
| C24+ LAO (wt%) | | 5.0 | |
| Irganox^{™} 1010 (wt%) | | 0.5 | 0.5 |
| Viscosity (mPa·s@ 140°C) (TMAL-01/grams) | 9325 | 6800 | 22150 |
| Viscosity (mPa·s @ 150°C) (TMAL-01/grams) | 5313 | 4550 | 14150 |
| Viscosity (mPa·s @ 160°C) (TMAL-01/grams) | 3275 | 3365 | 9225 |
| Viscosity (mPa·s @ 170°C) (TMAL-01/grams) | | | 6588 |

The polymer blend composition formed in Ex.5 was used to make three different HMA formulations (Examples 22-24), two of which contained different amounts of Vistamaxx^{™} 8880 (Ex.22-23), and one of which contained no other C3-based polymers (Ex.24). For comparison with Ex.22-24, an HMA formulation (Comparative Example 15) was prepared that contained Vistamaxx^{™} 8880, Vistamaxx^{™} 8780, and Vistamaxx^{™} 6502. Other ingredients employed in the HMA formulations of Ex.22-24 and C.Ex15 are shown in Table 12 below. Note that Escorez^{™} 5415 is a hydrogenated tackifier commercially available from ExxonMobil. Various physical properties of the HMA formulations were measured and are presented in Table 12. Adding the polymer blend formulation of Ex.5 to the HMA formulations of Ex.22-24 improved the HMA viscosity compared to C.Ex.15, allowing the HMA to be applied at lower temperatures.

**Table 12: Compositions and Properties of the Formulations of Ex.22-24 and C.Ex.15**

| | C.Ex. 15 | Ex.22 | Ex.23 | Ex.24 |
|---|---|---|---|---|
| Composition of Ex.5 (wt%) | | 25 | 25 | 30 |
| Vistamaxx^{™} 8880 (wt%) | 8.0 | | | |
| Vistamaxx^{™} 8780 (wt%) | 8.0 | 11.0 | | |
| Vistamaxx^{™} 6502 (wt%) | 22.0 | | | |
| REXtac^{™} 2730 (wt%) | | | 11.0 | |
| Escorez^{™} 5415 (wt%) (118°C SP) | 53.5 | 53.5 | 53.5 | 53.5 |
| Nyflex^{™} 223B (wt%) | 8.0 | 10.0 | 10.0 | 16.0 |
| Irganox^{™} 1010 (wt%) | 0.5 | 0.5 | 0.5 | 0.5 |
| Viscosity (mPa·s @ 160°C) (TMAL-01/grams) | 17,200 | 13,200 | 13900 | 12,100 |
| Viscosity (mPa·s @ 170°C) (TMAL-01/grams) | 12,170 | 9460 | 9850 | 8875 |
| Viscosity (mPa·s @ 180°C) (TMAL-01/grams) | 8946 | 6910 | 7200 | 6537 |

The polymer blend composition formed in Ex.5 was used to make three different HMA formulations (Examples 25-27), one of which contained no other polymers (Ex.25), one of which contained Vistamaxx^{™} 6102 high viscosity C3/C2 copolymer (Ex.26), and one of which contained Vistamaxx^{™} 6202 high viscosity C3/C2 copolymer (Ex.27). For comparison with Ex.25, an HMA formulation was prepared that contained Vistamaxx^{™} 8880 and Vistamaxx^{™} 6502 (Comparative Example 16). For comparison with Ex.26-27, an HMA formulation was prepared that contained Vistamaxx^{™} 8880, Vistamaxx^{™} 6202, and Vistamaxx^{™} 6102 (Comparative Example 17). Other ingredients in the HMA formulations of Ex.25-27 and C.Ex.16-17 are shown in Table 13 below. Various physical properties of the HMA formulations were measured and are also presented in Table 13.

**Table 13: Compositions and Properties of Formulations of Ex.25-27 and C.Ex.16-17**

| | C.Ex.16 | Ex.25 | C.Ex.17 | Ex.26 | Ex.27 |
|---|---|---|---|---|---|
| Composition of Ex.5 (wt%) | | 34.0 | | 20.0 | 20.0 |
| Vistamaxx^{™} 8880 (wt%) | 17.5 | | 12.5 | | |
| Vistamaxx^{™} 6202 (wt%) | | | 12.5 | | 5.0 |
| Vistamaxx^{™} 6502 (wt%) | 19.7 | | | | |
| Vistamaxx^{™} 6102 (wt%) | | | 5.0 | 5.0 | |
| Escorez^{™} 5415 (wt%) (118°C SP) | 52.8 | 52.8 | | | |
| Eastotac H-130W (wt%) (130°C SP) | | | 54.5 | 54.5 | 54.5 |
| Nyflex^{™} 223B (wt%) | 9.5 | 12.5 | | | |
| Primol^{™} 352 (wt%) | | | 15.0 | 20.0 | 20.0 |
| Irganox^{™} 1010 (wt%) | 0.5 | 0.5 | 0.5 | 0.5 | 0.5 |
| Viscosity (mPa·s @ 160°C) (TMAL-01/grams) | 10,830 | 24,500 | 21,400 | 15,680 | 10,250 |
| Viscosity (mPa·s @ 170°C) (TMAL-01/grams) | 7880 | 18,290 | 15,220 | 11,170 | 7325 |
| Viscosity (mPa·s @ 180°C) (TMAL-01/grams) | 5900 | 12,850 | 11,100 | 8188 | 5375 |

The polymer blend composition formed in Ex.5 was used to make two different HMA formulations (Examples 28 and 29). Both HMA formulations (Ex.28-29) contained Escorene^{™} Ultra UL 7710 ethylene-vinyl acetate (EVA) copolymer commercially available from Exxon, Escorez^{™} 5600, Sasolwax^{™} H1, and Irganox^{™} 1010. The HMA formulation of Ex.29 also included C24+ LAO. An HMA commercially available from H.B. Fuller Company, i.e., Advantra^{™} PHC 9256 (Comparative Example 18) was obtained for comparison with Ex.28-29. An HMA formulation containing Escorene^{™} Ultra UL 7710, Escorez^{™} 5600, and Sasolwax^{™} H1 (Comparative Example 19) was also prepared for comparison with Ex.28-29. Various physical properties of the HMA formulations were measured and are presented in Table 14 below, including shear adhesion failure temperature (SAFT) and peel adhesion failure temperature (PAFT). Adding the polymer blend formulation of Ex.5 to the HMA formulation of Ex.28, which also contained EVA copolymer, unexpectedly improved heat resistance (PAFT) and reduced set time compared to the HMA formulation of C.Ex.19.

**Table 14: Compositions and Properties of Formulations of Ex.28-29 and C.Ex.18-19**

| | C.Ex.18 | C.Ex.19 | Ex.28 | Ex.29 |
|---|---|---|---|---|
| Advantra^{™} 9256 (wt%) | 100.0 | | | |
| Composition of Ex.5 (wt%) | | | 5.0 | 5.0 |
| Escorene^{™} Ultra UL 7710 (wt%) | | 39.0 | 34.0 | 34.0 |
| Escorez^{™} 5600 (wt%) (11% aromaticity; 100°C SP) | | 40.0 | 40.0 | 40.0 |
| Sasolwax^{™} H1 (wt%) | | 20.0 | 20.0 | 15.0 |
| C24+ LAO (wt%) | | | | 5.0 |
| Irganox^{™} 1010 (wt%) | | 1.0 | 1.0 | 1.0 |
| Viscosity @ 177°C (mPa·s) op-202 | 831 | 1033 | 1330 | 1280 |
| % Fiber Tear @ -18°C op-208 | 11 | 89 | 99 | 50 |
| % Fiber tear @ 4°C op-208 | 98 | 74 | 38 | 74 |
| % Fiber tear @ RT op-208 | 100 | 99 | 99 | 99 |
| Manual Set Time op-208 (seconds) | 0.7 | 1.0 | 0.7 | 1.5 |
| PAFT (°C) | 68 | 57 | 60 | 50 |
| SAFT (°C) | 97 | 89 | 90 | 84 |

The polymer blend composition formed in Ex.5 was used to make two different HMA formulations (Examples 30 and 31). Both HMA formulations (Ex.30-31) contained Affinity ^{™} GA 1950 polyolefin elastomer commercially available from Dow Chemical Company, Escorez^{™} 5320 high SP hydrogenated tackifier, Sasolwax^{™} H1, and Irganox^{™} 1010. The HMA formulation of Ex.31 also contained C24+ LAO. An HMA formulation containing Affinity ^{™} GA 1950, Escorez^{™} 5320, and Sasolwax^{™} H1 (Comparative Example 20) was prepared for comparison with Ex.30-31. Various physical properties of the HMA formulations were measured and are tabulated in Table 15 below. Adding the polymer blend formulation of Ex.5 to the HMA formulation of Ex.30, which also contained a polyolefin elastomer, improved heat resistance (PAFT) and reduced set time compared to the HMA formulation of C.Ex.20.

**Table 15: Compositions and Properties of the Formulations of Ex.30-31 and C.Ex.20**

| | C.Ex.19 | Ex.28 | Ex.29 |
|---|---|---|---|
| Composition of Ex.5 (wt%) | | 5.0 | 5.0 |
| Affinity^{™} 1950 (wt%) | 39.5 | 34.5 | 29.5 |
| Escorez^{™} 5320 (wt%) (120°C SP) | 39.5 | 39.5 | 39.5 |
| Sasolwax^{™} H1 (wt%) | 20.0 | 20.0 | 10.0 |
| C24+ LAO (wt%) | | | 10.0 |
| Irganox^{™} 1010 (wt%) | 1.0 | 1.0 | 1.0 |
| Viscosity @ 177°C (mPa·s) op-202 | 1248 | 1715 | 2221 |
| % Fiber Tear @ -18°C op-208 | 91 | 100 | 100 |
| % Fiber tear @ 4°C op-208 | 100 | 100 | 100 |
| % Fiber tear @ RT op-208 | 100 | 100 | 100 |
| Manual Set Time op-208 (seconds) | 1.3 | 1.0 | >2.0 |
| PAFT (°C) | 59 | 62 | 50 |
| SAFT (°C) | 89 | 75 | 71 |

### Process for Preparing HMA Formulations in Tables 7-13

All of the raw materials for each formulation were weighed into a 1-gallon can and heated in a 180°C oven for approximately 3 hours (or until all of the ingredients were visibly molten). The can was then placed in a heating mantle at 180°C and mixed with a mixer blade that has a solid disc with numerous blades on the edge that are bent up and down in an alternating manner for the circumference of the blade for 30 to 40 minutes. Once each mixture was clearly homogeneous, it was added to a melt tank and allowed to equilibrate to the application temperature.

The formulations in Tables 7-10 were subjected to bond preparation as follows. Each HMA formulation was applied in molten form to a polyethylene (PE) backsheet (0.001" DH-284 PE Microflex^{™} embossed non-breathable film commercially available from Clopay Plastic Products Co. Inc. (purchased by Berry Global Group Inc.) using a Nordson CF^{™} controlled fiberization nozzle at an application temperature in the range of 140°C to 170°C, a coat weight of 3 g/m² (gsm) and a linespeed of 800 ft/min. After the molten adhesive was coated to the PE backsheet, it was laminated to a nonwoven fiber (UNIPRO 45 commercially available from Midwest Filtration LLC) and wound up on a roll.

The formulations in Tables 11-13 were subjected to bond preparation as follows. Each HMA formulations was applied in molten form to three LYCRA^{™} 470 dtex strands (pre-stretched to 300%) using a Nordson Allegro^{™} nozzle at an application temperature in the range of 160°C to 180°C, a coat weight of 50 mg/strand/meter, and a linespeed of 500 ft/min. The strands were then laminated between a nonwoven fiber (UNIPRO 45) and a PE backsheet (Clopay 0.001" DH-284 PE Microñex^{™}).

### Process for Preparing HMA Formulations in Tables 14 and 15

The HMA formulations were prepared by preheating the tackifier, oil, antioxidant, and other additives to 177°C. The polymeric components were slowly added in a heated mantle at 177° C to the molten liquid of tackifier, oil, antioxidant, and other additives, until all of the polymeric components were added. The components were blended by manual stirring using a spatula until all polymer pellets were melted and the mixture was homogeneous. The components were stirred for an additional 10 minutes. The resulting adhesive mixture was removed from the heating mantle and poured onto release paper. After the adhesive mixture solidified, it was cut into small pieces for testing.

### Test Procedures for the Properties in Tables 1-6

The MFR was measured according to ASTM D1238, the Brookfield viscosity was measured according to ASTM D3236, and the flexural modulus was measured according to ASTM D790.

The distributions and the moments of molecular weight (Mw, Mn, Mw/Mn) were determined by using a high temperature Gel Permeation Chromatography (Polymer Char GPC-IR) equipped with a multiple-channel band-filter based Infrared detector IR5, an 18-angle light scattering detector and a viscometer. Three Agilent Plgel 10µm Mixed-B LS columns are used to provide polymer separation. Detailed analytical principles and methods for molecular weight determinations are described in paragraphs [0044]-[0051] of PCT Publication WO2019/246069A1 (noting that the equation for c referenced in Paragraph [0044] therein for concentration I at each point in the chromatogram, is c = βI, where β is mass constant and I is the baseline-subtracted IR5 broadband signal intensity (I)). Unless specifically mentioned, all the molecular weight moments used or mentioned in the present disclosure are determined according to the conventional molecular weight (IR molecular weight) determination methods (e.g., as referenced in paragraphs [0044]-[0045] of the just-noted publication), noting that for the equation in such paragraph [0044], *a* = 0.695 and K = 0.000579(1-0.75Wt) are used, where Wt is the weight fraction for hexane comonomer, and further noting that comonomer composition is determined by the ratio of the IR5 detector intensity corresponding to CH₂ and CH₃ channel calibrated with a series of PE and PP homo/copolymer standards whose nominal values are predetermined by NMR or FTIR (providing methyls per 1000 total carbons (CH₃/1000 TC)) as noted in Paragraph [0045] of the just-noted PCT publication).

The TREF technique was performed as described in Wild, et al., J. Poly. Sci., Poly. Phys. Ed., Vol. 20, pg. 441 (1982) and U.S. Pat. No. 5,008,204.

The DSC data was measured as follows. Non isothermal DSC was conducted between - 50°C to 200°C at the ramp rate of 10°C/min using a PerkinElmer DSC 8000. For the samples with heat of fusion greater than 10 J/g, second melting endotherm was utilized while for samples with ≤ 10 J/g heat of fusion, reported Tₘ and H_{f} values were taken from either the first or the second melt endotherm of the DSC scan. Isothermal DSC was conducted on a HyperDSC^{™} (PerkinElmer DSC 8500). The sample was held at 200°C for 3 min and then cooled to 5°C, 7°C, or 10°C. The crystallization half-time, t_{1/2}, which was reported in minutes, was estimated based on the time taken to reach 50% of the total crystallinity.

The isotactic (mm) triad tacticity data was obtained using ¹³C NMR as described in in EP 0629632B1, particularly paragraphs [0167]-[0190].

The polymers produced herein had regio defects (as determined by ¹³C NMR), based upon the total propylene monomer. Three types of defects are defined to be the regio defects: 2,1-erythro; 2,1-threo; and 3,1-isomerization as well as a defect followed by ethylene insertion. The structures and peak assignments for these can be found in L. Resconi, et al., Chem. Rev., Vol. 100, pp. 1253-1345 (2000.

Viscosities of the carpet backing formulations were measured using a Rosand Precision Rheometer with a flat faced die with 32 mm length and 2 mm diameter. The sample was loaded and preheated for 1 min at 204 °C. The following shear rates were utilized for measurements: 50 s⁻¹; 80 s⁻¹; 130 s⁻¹; 200 s⁻¹; 250 s⁻¹; 300 s⁻¹; 432 s⁻¹; and 730 s⁻¹. The viscosity values (Pa-s) at 200 s⁻¹ and 300 s⁻¹ were recorded in Table 6.

Growth force measurement was conducted using a TA Instruments ARES-G2 rheometer. Sample strips with 1 mm thickness, 13 mm width, and 38 mm length were prepared using a compression molding press. Each sample was tested under fixed strain while the temperature was changed at a fix ramp rate of 2°C/min. The resulting sample stretching or buckling observed in the measured axial force or normal force was reported as functions of temperature and time. The maximum axial force and the axial force at 40°C was calculated using TA Instruments TRIOS software.

### Test Procedures for the HMA Properties in Tables 7-15

The Brookfield viscosity was measured according to ASTM D3236. The softening point is the temperature at which a material will flow and was measured according to ASTM E-28. The PAFT and SAFT were measured according to ASTM D-4498. Aromaticity was determined by NMR spectroscopy and was measured in mol% of aromatic protons. Peel or peel strength is a measure of the average force needed to pull apart two bonded materials and was tested in a T-Peel fashion on a slip/peel tester from IMASS Inc. at 12 in/min, as determined according to ASTM D-903.

Fiber tear describes the bond strength of the adhesive to the substrate and was measured at 25°C, 4°C, and -18°C. Fiber tear is a visual measurement as to the amount of paper substrate fibers that are attached to a bond after the substrates are tom apart. 100% fiber tear means the adhesive is stronger than the substrate and 100% of the adhesive is covered in substrate fibers. 0% fiber tear means the adhesive does not bond at all and simply pops off the substrate. Fiber tear was determined by bonding together substrates with the HMA. A drop of molten adhesive (180°C) was positioned on a first substrates with an eye dropper. A second substrate was placed on top of the HMA, and a 500 g weight was placed on top of the second substrate for even application. The HMA was then cooled at the referenced temperature for at least one hour. The substrates were then torn apart, and the HMA was inspected for fiber tear.

Set time is the minimal holding time to build bond cohesion requiring more than 10 kg force to break the bond. Set time was determined by bonding together substrates with the HMA after the molten adhesive (180°C) has been dropped onto a first substrate with an eye dropper. The second substrate was placed on top of the adhesive, and a 500 g weight was placed on top of the second substrate for even application. After a predetermined interval of time, the second substrate was removed and checked for fiber tear. If no fiber tear was found, a longer interval of time was tried. This cycle continued until fiber tear was found. This length of time was reported as the set time.

## Claims

1. A polymer blend composition, comprising: a major polymer fraction comprising propylene derived units and at least one other comonomer derived units, the major polymer fraction having a Mw of 100,000 g/mol to 300,000 g/mol and a melt flow rate (MFR) of 0.1 g/10 min to 70.0 g/10 min, according to ASTM D1238; and a minor polymer fraction comprising propylene derived units and at least one other comonomer derived units, the minor polymer fraction having a Mw of 5,000 g/mol to 60,000 g/mol and a Brookfield viscosity of 500 mPa·s to 50,000 mPa·s, according to ASTM D-3236 (190°C), wherein an amount of the at least one other polyolefin comonomer in the minor polymer fraction is at least 7 wt% less than an amount of the at least one other polyolefin comonomer in the major polymer fraction.

2. The polymer blend composition of claim 1, comprising 60 wt% to 95 wt% of the major polymer fraction and 5 wt% to 40 wt% of the minor polymer fraction.

3. The polymer blend composition of claim 1 or 2, wherein the major polymer fraction comprises 10 wt% to 30 wt% of the at least one other comonomer derived units and the minor polymer fraction comprises 2 wt% to 8 wt% of the at least one other comonomer derived units.

4. The polymer blend composition of claims 1 to 3, wherein the at least one other comonomer derived units comprise ethylene derived units, a C4 to C10 alpha-olefin, or combinations thereof.

5. The polymer blend composition of claims 1 to 4, wherein the composition has a broad or bimodal molecular weight distribution of 2.7 to 5.0.

6. The polymer blend composition of claims 1 to 5, wherein the composition has a MFR of 80 g/10 min to 400 g/10 min, according to ASTM D1238.

7. The polymer blend composition of claims 1 to 6, wherein a triad tacticity of the major polymer fraction is greater than or equal to a triad tacticity of the minor polymer fraction.

8. The polymer blend composition of claims 1 to 7, wherein the major polymer fraction has a heat of fusion of less than or equal to 10 J/g, wherein the heat of fusion is determined using the differential scanning calorimetry method provided in the specification.

9. A carpet backing sheet or a melt blown fiber comprising the polymer blend composition of claim 1.

10. A hot melt adhesive composition comprising a polymer blend composition, comprising: a major polymer fraction comprising propylene derived units and at least one other comonomer derived units, the major polymer fraction having a Mw of 100,000 g/mol to 300,000 g/mol and a melt flow rate of 0.1 g/10 min to 70.0 g/10 min, according to ASTM D1238; and a minor polymer fraction comprising propylene derived units and at least one other comonomer derived units, the minor polymer fraction having a Mw of 5,000 g/mol to 60,000 g/mol and a Brookfield viscosity of 500 mPa·s to 50,000 mPa·s, according to ASTM D-3236 (190°C), wherein an amount of the at least one other polyolefin comonomer in the minor polymer fraction is at least 7 wt% less than an amount of the at least one other polyolefin comonomer in the major polymer fraction.

11. The hot melt adhesive composition of claim 10, wherein an amount of the polymer blend composition in the hot melt adhesive composition is 1 wt % to 40 wt%.

12. The hot melt adhesive composition of claim 10 or 11, further comprising 10 wt% to 70 wt% of a tackifier, wherein the tackifier has a softening point of 50°C to 150°C and an aromaticity of 0% to 15 %.

13. The hot melt adhesive composition of claims 10 to 12, further comprising 0 wt% to 30 wt% of a wax, and further comprising 0 wt% to 30 wt% of an oil.

14. The hot melt adhesive composition of claims 10 to 13, further comprising 0 wt% to 75 wt% of an amorphous polyalphaolefin, further comprising 0 wt% to 15 wt% of a linear alpha olefin, and further comprising 0 wt% to 40 wt% of an ethylene-vinyl acetate.

15. A process for making a polymer blend composition, comprising: combining a major polymer fraction comprising propylene derived units and at least one other comonomer derived units with a minor polymer fraction comprising propylene derived units and at least one other comonomer derived units to form a polymer blend composition, the major polymer fraction having a Mw of 100,000 g/mol to 300,000 g/mol and a MFR of 0.1 g/10 min to 70.0 g/10 min, according to ASTM D1238, and the minor polymer fraction having a Mw of 5,000 g/mol to 60,000 g/mol and a Brookfield viscosity of 500 mPa·s to 50,000 mPa·s, according to ASTM D-3236 (190°C), wherein an amount of the at least one other comonomer derived units in the minor polymer fraction is at least 7 wt% less than an amount of the at least one other comonomer derived units in the major polymer fraction.

## Patentansprüche

1. Polymerblend-Zusammensetzung, umfassend: eine Hauptpolymerfraktion, die von Propylen abgeleitete Einheiten und mindestens eine andere von einem Comonomer abgeleitete Einheit umfasst, wobei die Hauptpolymerfraktion ein Mw von 100.000 g/mol bis 300.000 g/mol und eine Schmelzflussrate (MFR) von 0,1 g/10 min bis 70.0 g/10 min, gemäß ASTM D1238 aufweist; und eine Nebenpolymerfraktion, die von Propylen abgeleitete Einheiten und mindestens eine andere von einem Comonomer abgeleitete Einheit umfasst, wobei die Nebenpolymerfraktion ein Mw von 5.000 g/mol bis 60.000 g/mol und eine Brookfield-Viskosität von 500 mPa·s bis 50.000 mPa·s, gemäß ASTM D-3236 (190°C) aufweist, wobei eine Menge des mindestens einen anderen Polyolefin-Comonomers in der Nebenpolymerfraktion mindestens 7 Gew.% geringer ist als die Menge des mindestens einen anderen Polyolefin-Comonomers in der Hauptpolymerfraktion.

2. Polymerblend-Zusammensetzung nach Anspruch 1, die 60 bis 95 Gew.-% der Hauptpolymerfraktion und 5 bis 40 Gew.-% der Nebenpolymerfraktion umfasst.

3. Polymerblend-Zusammensetzung nach Anspruch 1 oder 2, wobei die Hauptpolymerfraktion 10 Gew.-% bis 30 Gew.-% der mindestens einen von einem anderen Comonomer abgeleiteten Einheit umfasst und die Nebenpolymerfraktion 2 Gew.-% bis 8 Gew.-% der mindestens einen von einem anderen Comonomer abgeleiteten Einheit umfasst.

4. Polymerblend-Zusammensetzung nach einem der Ansprüche 1 bis 3, wobei die mindestens eine andere von einem Comonomer abgeleitete Einheit von Ethylen abgeleitete Einheiten, ein C4- bis C10-alpha-Olefin oder Kombinationen davon umfasst.

5. Polymerblend-Zusammensetzung nach einem der Ansprüche 1 bis 4, wobei die Zusammensetzung eine breite oder bimodale Molekulargewichtsverteilung von 2,7 bis 5,0 aufweist.

6. Polymerblend-Zusammensetzung nach einem der Ansprüche 1 bis 5, wobei die Zusammensetzung eine MFR von 80 g/10 min bis 400 g/10 min gemäß ASTM D1238 aufweist.

7. Polymerblend-Zusammensetzung nach einem der Ansprüche 1 bis 6, wobei die Triadentaktizität der Hauptpolymerfraktion größer als oder gleich der Triadentaktizität der Nebenpolymerfraktion ist.

8. Polymerblend-Zusammensetzung nach einem der Ansprüche 1 bis 7, wobei die Hauptpolymerfraktion eine Schmelzwärme von weniger als oder gleich 10 J/g aufweist, wobei die Schmelzwärme unter Verwendung des in der Beschreibung angegebenen Differentialscanningkalorimetrie-Verfahrens bestimmt wird.

9. Teppichrückseitenbahn oder eine schmelzgeblasene Faser, die die Polymerblend-Zusammensetzung gemäß Anspruch 1 umfasst.

10. Schmelzklebstoffzusammensetzung, die eine Polymerblend-Zusammensetzung umfasst, die eine Hauptpolymerfraktion, die von Propylen abgeleitete Einheiten und mindestens eine andere von einem Comonomer abgeleitete Einheit umfasst, wobei die Hauptpolymerfraktion ein Mw von 100.000 g/mol bis 300.000 g/mol und eine Schmelzflussrate von 0,1 g/10 min bis 70.0 g/10 min gemäß ASTM D1238 aufweist; und eine Nebenpolymerfraktion umfasst, die von Propylen abgeleitete Einheiten und mindestens eine andere von einem Comonomer abgeleitete Einheit umfasst, wobei die Nebenpolymerfraktion ein Mw von 5.000 g/mol bis 60.000 g/mol und eine Brookfield-Viskosität von 500 mPa·s bis 50.000 mPa·s gemäß ASTM D-3236 (190°C) aufweist, wobei eine Menge des mindestens einen anderen Polyolefin-Comonomers in der Nebenpolymerfraktion mindestens 7 Gew.% geringer ist als die Menge des mindestens einen anderen Polyolefin-Comonomers in der Hauptpolymerfraktion.

11. Schmelzklebstoffzusammensetzung nach Anspruch 10, wobei die Menge der Polymerblend-Zusammensetzung in der Schmelzklebstoffzusammensetzung 1 Gew.-% bis 40 Gew.-% beträgt.

12. Schmelzklebstoffzusammensetzung nach Anspruch 10 oder 11, die weiterhin 10 Gew.-% bis 70 Gew.-% eines Klebrigmachers enthält, wobei der Klebrigmacher einen Erweichungspunkt von 50 °C bis 150 °C und eine Aromatizität von 0 % bis 15 % aufweist.

13. Schmelzklebstoffzusammensetzung nach einem der Ansprüche 10 bis 12, die weiterhin 0 bis 30 Gew.-% eines Wachses und weiterhin 0 bis 30 Gew.-% eines Öls enthält.

14. Schmelzklebstoffzusammensetzung nach einem der Ansprüche 10 bis 13, die weiterhin 0 bis 75 Gew.-% eines amorphen Polyalphaolefins, weiterhin 0 bis 15 Gew.-% eines linearen alpha-Olefins und weiterhin 0 bis 40 Gew.-% eines Ethylen-Vinylacetats umfasst.

15. Verfahren zur Herstellung einer Polymerblend-Zusammensetzung, umfassend: Kombinieren einer Hauptpolymerfraktion, die von Propylen abgeleitete Einheiten und mindestens eine andere von einem Comonomer abgeleitete Einheit umfasst, mit einer Nebenpolymerfraktion, die von Propylen abgeleitete Einheiten und mindestens mindestens eine andere von einem Comonomer abgeleitete Einheit umfasst, um eine Polymerblend-Zusammensetzung zu bilden, wobei die Hauptpolymerfraktion ein Mw von 100.000 g/mol bis 300.000 g/mol und eine MFR von 0,1 g/10 min bis 70.0 g/10 min, gemäß ASTM D1238 aufweist; und die Nebenpolymerfraktion ein Mw von 5.000 g/mol bis 60.000 g/mol und eine Brookfield-Viskosität von 500 mPa·s bis 50.000 mPa·s gemäß ASTM D-3236 (190°C) aufweist, wobei eine Menge des mindestens einen anderen Polyolefin-Comonomers in der Nebenpolymerfraktion mindestens 7 Gew.% geringer ist als die Menge des mindestens einen anderen Polyolefin-Comonomers in der Hauptpolymerfraktion.

## Revendications

1. Composition de mélange de polymères, comprenant : une fraction de polymère majoritaire comprenant des unités dérivées du propylène et au moins une autre unité dérivée d'un comonomère, la fraction de polymère majoritaire ayant un Mw de 100 000 g/mole à 300 000 g/mole et un indice de fluidité à chaud (MFR) de 0,1 g/10 min à 70,0 g/10 min, selon la norme ASTM D1238 ; et une fraction de polymère minoritaire comprenant des unités dérivées du propylène et au moins une autre unité dérivée d'un comonomère, la fraction de polymère minoritaire ayant un Mw de 5 000 g/mole à 60 000 g/mole et une viscosité Brookfield de 500 mPa·s à 50 000 mPa·s, selon la norme ASTM D-3236 (190 °C), dans laquelle une quantité de l'au moins un autre comonomère polyoléfinique dans la fraction de polymère minoritaire est au moins 7 % en poids inférieure à une quantité de l'au moins un autre comonomère polyoléfinique dans la fraction de polymère majoritaire.

2. Composition de mélange de polymères selon la revendication 1, comprenant 60 % en poids à 95 % en poids de la fraction de polymère majoritaire et 5 % en poids à 40 % en poids de la fraction de polymère minoritaire.

3. Composition de mélange de polymères selon la revendication 1 ou 2, dans laquelle la fraction de polymère majoritaire comprend 10 % en poids à 30 % en poids de l'au moins une autre unité dérivée d'un comonomère et la fraction de polymère minoritaire comprend 2 % en poids à 8 % en poids de l'au moins une autre unité dérivée d'un comonomère.

4. Composition de mélange de polymères selon les revendications 1 à 3, dans laquelle l'au moins une autre unité dérivée d'un comonomère comprend des unités dérivées d'éthylène, une alpha-oléfine en C4 à C10, ou des combinaisons de ceux-ci.

5. Composition de mélange de polymères selon les revendications 1 à 4, dans laquelle la composition a une distribution de poids moléculaire large ou bimodale de 2,7 à 5,0.

6. Composition de mélange de polymères selon les revendications 1 à 5, dans laquelle la composition a un MFR de 80 g/10 min à 400 g/10 min, selon la norme ASTM D1238.

7. Composition de mélange de polymères selon les revendications 1 à 6, dans laquelle une tacticité de triade de la fraction de polymère majoritaire est supérieure ou égale à une tacticité de triade de la fraction de polymère minoritaire.

8. Composition de mélange de polymères selon les revendications 1 à 7, dans laquelle la fraction de polymère majoritaire a une chaleur de fusion inférieure ou égale à 10 J/g, dans laquelle la chaleur de fusion est déterminée en utilisant le procédé de calorimétrie à balayage différentiel fourni dans la description.

9. Feuille de support de tapis ou fibre soufflée à l'état fondu comprenant la composition de mélange de polymères selon la revendication 1.

10. Composition d'adhésif thermofusible comprenant une composition de mélange de polymères, comprenant : une fraction de polymère majoritaire comprenant des unités dérivées du propylène et au moins une autre unité dérivée d'un comonomère, la fraction de polymère majoritaire ayant un Mw de 100 000 g/mole à 300 000 g/mole et un indice de fluidité à chaud de 0,1 g/10 min à 70,0 g/10 min, selon la norme ASTM D1238 ; et une fraction de polymère minoritaire comprenant des unités dérivées du propylène et au moins une autre unité dérivée d'un comonomère, la fraction de polymère minoritaire ayant un Mw de 5 000 g/mole à 60 000 g/mole et une viscosité Brookfield de 500 mPa·s à 50 000 mPa·s, selon la norme ASTM D-3236 (190 °C), dans laquelle une quantité de l'au moins un autre comonomère polyoléfinique dans la fraction de polymère minoritaire est au moins 7 % en poids inférieure à une quantité de l'au moins un autre comonomère polyoléfinique dans la fraction de polymère majoritaire.

11. Composition d'adhésif thermofusible selon la revendication 10, dans laquelle une quantité de la composition de mélange de polymères dans la composition d'adhésif thermofusible est de 1 % en poids à 40 % en poids.

12. Composition d'adhésif thermofusible selon la revendication 10 ou 11, comprenant en outre 10 % en poids à 70 % en poids d'un agent tackifiant, dans laquelle l'agent tackifiant a un point de ramollissement de 50 °C à 150 °C et une aromaticité de 0 % à 15 %.

13. Composition d'adhésif thermofusible selon les revendications 10 à 12, comprenant en outre 0 % en poids à 30 % en poids d'une cire, et comprenant en outre 0 % en poids à 30 % en poids d'une huile.

14. Composition d'adhésif thermofusible selon les revendications 10 à 13, comprenant en outre 0 % en poids à 75 % en poids d'une polyalphaoléfine amorphe, comprenant en outre 0 % en poids à 15 % en poids d'une alpha-oléfine linéaire, et comprenant en outre 0 % en poids à 40 % en poids d'un éthylène-acétate de vinyle.

15. Procédé de fabrication d'une composition de mélange de polymères, comprenant : la combinaison d'une fraction de polymère majoritaire comprenant des unités dérivées du propylène et au moins une autre unité dérivée d'un comonomère avec une fraction de polymère minoritaire comprenant des unités dérivées du propylène et au moins une autre unité dérivée d'un comonomère pour former une composition de mélange de polymères, la fraction de polymère majoritaire ayant un Mw de 100 000 g/mole à 300 000 g/mole et un MFR de 0,1 g/10 min à 70,0 g/10 min, selon la norme ASTM D1238, et la fraction de polymère minoritaire ayant un Mw de 5 000 g/mole à 60 000 g/mole et une viscosité Brookfield de 500 mPa·s à 50 000 mPa·s, selon la norme ASTM D-3236 (190 °C), dans laquelle une quantité de l'au moins une autre unité dérivée d'un comonomère dans la fraction de polymère minoritaire est au moins 7 % en poids inférieure à une quantité de l'au moins une autre unité dérivée d'un comonomère dans la fraction de polymère majoritaire.
